(19) **Europäisches Patentamt / European Patent Office / Office européen des brevets**

(11) **EP 2 849 979 B1**

(12) # EUROPÄISCHE PATENTSCHRIFT

(45) Veröffentlichungstag und Bekanntmachung des Hinweises auf die Patenterteilung:
**18.05.2016   Patentblatt 2016/20**

(21) Anmeldenummer: **13712207.3**

(22) Anmeldetag: **21.03.2013**

(51) Int Cl.:
*B60W 40/12* (2012.01)    *B60W 30/06* (2006.01)
*G01B 5/02* (2006.01)

(86) Internationale Anmeldenummer:
**PCT/EP2013/055909**

(87) Internationale Veröffentlichungsnummer:
**WO 2013/170984 (21.11.2013 Gazette 2013/47)**

(54) **VERFAHREN UND VORRICHTUNG ZUM ERMITTELN DES UMFANGES EINES AN EINEM FAHRZEUG VERBAUTEN REIFENS**

METHOD AND DEVICE FOR DETERMINING THE CIRCUMFERENCE OF A TYRE FITTED ON A VEHICLE

PROCÉDÉ ET DISPOSITIF DE DÉTERMINATION DE LA CIRCONFÉRENCE D'UN PNEUMATIQUE MONTÉ SUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2012   DE 102012208298**

(43) Veröffentlichungstag der Anmeldung:
**25.03.2015   Patentblatt 2015/13**

(73) Patentinhaber: **Robert Bosch GmbH
70442 Stuttgart (DE)**

(72) Erfinder:
• **PAMPUS, Christian
  71229 Leonberg (DE)**
• **ISKE, Burkhard
  71272 Renningen (DE)**
• **OEZASLAN, Hakan
  71636 Ludwigsburg (DE)**
• **SCHIERLE, Inga
  71229 Leonberg (DE)**

(56) Entgegenhaltungen:
**EP-A1- 1 826 530        DE-A1-102009 029 272
US-A1- 2008 149 782**

EP 2 849 979 B1

**Beschreibung**

Bereich der Erfindung

Die vorliegende Erfindung betrifft ein Verfahren und eine entsprechende Vorrichtung zum Ermitteln des Umfanges der am Fahrzeug verbauten Reifen. Auch betrifft die Erfindung ein Verfahren und ein entsprechendes Einparksystem zum automatischen Einparken eines Fahrzeuges. Ferner betrifft die Erfindung ein Fahrzeugassistenzsystem mit der erfindungsgemäßen Vorrichtung zum Ermitteln des Reifenumfanges der am Fahrzeug verbauten Reifen und/oder mit dem erfindungsgemäßen Einparksystem.

Stand der Technik

Automatische Einparksysteme in Fahrzeugen vermessen während der Fahrt eventuell in Frage kommende Parklücken. Wenn der Fahrer in eine Parklücke einparken möchte, errechnen die Systeme die zugehörige Trajektorie und lenken das Fahrzeug in die Parklücke. Wichtig dabei ist, den genauen Reifenumfang zu kennen. Nur so kann gewährleistet werden, dass die berechnete und tatsächliche Bahn genau miteinander übereinstimmen und das Fahrzeug optimal in der Parklücke zum Stehen kommt. Ist die Abweichung zwischen angenommenem und tatsächlichem Reifenumfang zu groß, führt dies zu einem mangelhaften Einparkergebnis, wobei das das Fahrzeug entweder zu weit außerhalb der Parklücke parkt oder auf den Bordstein fährt.

Der wesentlichste Faktor für einen großen Unterschied zwischen realem Reifenumfang und dem vom Einparksystem angenommen Reifenumfang ist ein Reifenwechsel auf eine andere Reifengröße.

Üblicherweise haben die zugelassenen Reifen für ein Fahrzeug vergleichbare Reifenumfänge, sodass häufig von einer mittleren Reifengröße ausgegangen werden kann. Es kann aber auch vorkommen, dass es Reifen mit deutlich unterschiedlichen Reifenumfängen (wie beispielsweise Winterreifen oder Sommerreifen) gibt, sodass ein mangelhaftes Einparkergebnis entstehen kann.

Verfahren zur Umfangsermittlung eines Rades eines Fahrzeuges sind aus dem Stand der Technik bekannt. Beispielsweise ist aus dem Dokument EP 1 826 530 A1 ein Verfahren zur Umfangsermittlung eines Reifens bzw. Rades eines Fahrzeuges mit mindestens zwei Rädern beschrieben, bei dem ein Umfang eines ersten Rades der mindestens zwei Räder anhand einer Gierrate des Fahrzeuges, einer ersten Drehgeschwindigkeit des ersten Rades, einer zweiten Drehgeschwindigkeit eines zweiten Rades der mindestens zwei Räder und einem Abstand zwischen dem ersten Rad und dem zweiten Rad, d.h. der Spurbreite ermittelt wird.

Nachteilig dabei ist, dass die Gierrate, die in diesem Fall einen wesentlichen Beitrag zur Bestimmung des Reifenumfangs bzw. Radumfanges leistet, typischerweise einen relativen Fehler von bis zu 3% hat. Bei der Genauigkeit des Reifenumfangs wird beispielsweise bei automatischen Einparksystemen jedoch eine erreichbare Größenordnung von etwa 1% benötigt.

Aus dem Dokument DE 10 2009 029 272 A1 ist eine Vorrichtung zur Ermittlung der Reifenart eines Fahrzeugs bekannt, bei der aus einem Temperatursignal, einer Datumsinformation und einer Positionsinformation auf eine Reifenart (Sommer- oder Winterreifen) geschlossen wird. Ein Reifenumfang für die ermittelte Reifenart wird aus einem Speicher ausgelesen und steht weiteren Fahrzeugfunktionen zur Verfügung.

Aus dem Dokument US 2008/149782 A1 ist ein System zur Erkennung und Klassifizierung von Rädern bei Schienenfahrzeugen. Dazu sind ortsfeste Sensoren auf einem Gleis vorgesehen, die die Anwesenheit und den Umfang eines Rades vermessen.

Offenbarung der Erfindung

Erfindungsgemäß wird ein Verfahren zum Ermitteln des Umfanges der an einem Fahrzeug verbauten Reifen bereitgestellt, bei dem der Umfang der verbauten Reifen innerhalb eines vorbestimmten Toleranzbandes abgeschätzt wird. Dabei werden die an dem Fahrzeug verbaubaren Reifen in mindestens zwei derartig definierten Klassen eingeteilt, bei denen die Umfänge der verbaubaren Reifen jeweils in einem in einem für jede Klasse vorbestimmten Umfangsintervall enthalten sind, wobei die Umfangsintervalle der zwei Klassen sich nicht überlappen und jeweils eine Intervallgröße kleiner als das Toleranzband des abgeschätzten Umfanges der verbauten Reifen aufweisen. Ferner werden die verbauten Reifen anhand ihres abgeschätzten Umfanges einer der zwei Klassen zugeordnet. Der Umfang der verbauten Reifen wird dabei anhand der bestimmten Klassenzugehörigkeit der verbauten Reifen ermittelt.

Mit Intervall wird ein Wertebereich bezeichnet, der sich zwischen einem minimalen und einem maximalen Wert erstreckt. Die Differenz zwischen dem genannten maximalen und dem genannten minimalen Wert wurde als Intervallgröße bezeichnet.

Weiterhin wird erfindungsgemäß eine Vorrichtung zum Ermitteln des Umfanges der an einem Fahrzeug verbauten Reifen bereitgestellt, die dazu ausgebildet ist, den Umfang der verbauten Reifen innerhalb eines vorbestimmten Toleranzbandes abzuschätzen. Ferner umfasst die erfindungsgemäße Vorrichtung eine Auswerteeinrichtung, die dazu ausgebildet ist, die an dem Fahrzeug verbaubaren Reifen in mindestens zwei Klassen von vorbestimmtem Umfangsintervall einzuteilen, derart dass die Umfangsintervalle der zwei Klassen sich nicht überlappen und jeweils eine kleinere Intervallgröße als das Toleranzband des abgeschätzten Umfanges der verbauten Reifen aufweisen. Ferner ist die Auswerteeinheit weiter dazu ausgebildet, die verbauten Reifen anhand ihres abgeschätzten Umfanges einer der zwei Klassen zuzuordnen und dadurch den Umfang der verbauten Reifen anhand der bestimmten Klassenzugehörigkeit des verbauten Reifens zu ermitteln.

Die Erfindung wird in den unabhängigen Ansprüchen 1 und 5 definiert.

Die Unteransprüche zeigen bevorzugte Weiterbildungen der Erfindung.

Bei dem erfindungsgemäßen Verfahren wird der ungefähre Reifenumfang mindestens eines verbauten Reifen hinreichend genau abgeschätzt und einer Klasse von Reifen mit ähnlichen Reifenumfängen zugeordnet.

Bei der Abschätzung des ungefähren Reifenumfangs der verbauten Reifen wird ein mit einem der verwendeten Messmethode entsprechenden Toleranzband behafteter Absolutwert des Reifenumfangs bestimmt. Ferner werden die an dem Fahrzeug verbaubaren Reifen in mehreren Klassen von Reifen mit ähnlichen Reifenumfängen eingeteilt. Dadurch, dass die Abweichungen zwischen den Reifenumfängen innerhalb einer Klasse jeweils kleiner als das Toleranzband des abgeschätzten Reifenumfanges der verbauten Reifen sind, kann der Reifenumfang der verbauten Reifen nach seiner Zuordnung zu einer der mehreren Klassen genauer ermittelt werden. Die Ermittlungsgenauigkeit des Reifenumfangs der verbauten Reifen entspricht dann den Abweichungen der Reifenumfänge innerhalb der Klasse, zu der die verbauten Reifen anhand ihres abgeschätzten Reifenumfangs zugeordnet wurden.

Mittels des erfindungsgemäßen Verfahrens wird über die Reifenumfangsabschätzung nur die Zuordnung eines verbauten Reifen zu einer Klasse von Reifen ähnlichen Reifenumfanges vorgenommen, wobei aber keine Zuordnung zu einem absoluten Reifenradius vorgenommen wird. Dadurch ist es möglich, große Unterschiede zwischen dem realen Reifenumfang eines verbauten Reifens und einem angenommenen Reifenumfang zum Beispiel nach einem Reifenwechsel zu erkennen und zu korrigieren. Auf diese Weise kann die Robustheit und die Kundenwertigkeit von Systemen, wie beispielsweise von automatisierten Einparksystemen, die eine genaue Kenntnis der realen Reifenumfängen der verbauten Reifen benötigen, verbessert werden.

Bei einer besonders bevorzugten Ausführungsform der Erfindung werden die verbauten Reifen einer der mindestens zwei verschiedenen Klassen zugeordnet, wenn der Absolutwert des abgeschätzten Umfanges der verbauten Reifen in dem Umfangsintervall dieser Klasse enthalten ist.

Insbesondere wenn der Absolutwert des abgeschätzten Umfangs der verbauten Reifens von dem zwischen den Umfangsintervallen der zwei Klassen liegenden Umfangsintervalls liegt, wird bei einer sehr vorteilhaften Ausführungsform der Erfindung der Differenzwert zwischen dem Absolutwert des abgeschätzten Umfanges der verbauten Reifen und dem Umfang eines anfänglich verbauten Reifens berechnet. Anschließend wird dann der berechnete Differenzwert mit der Intervallgröße des zwischen den Umfangsintervallen der zwei Klassen vorhandenen Umfangsintervalls verglichen und die verbauten Reifen entsprechend des Vergleichsergebnisses einer der zwei Klassen zugeordnet.

Durch die erfindungsgemäße Einteilung der an dem Fahrzeug verbaubaren Reifen in mindestens zwei verschiedene Klassen von Reifen reduziert sich erfindungsgemäß die Aufgabe auf die Identifikation von verbauten Reifen zur Bestimmung ihrer Zugehörigkeit zu einer Klasse von Reifen. Wenn ein Umfang eines verbauten Reifens anfänglich bekannt ist, muss lediglich nur noch erkannt werden, ob ein Reifenwechsel stattgefunden hat. Dabei relevant ist lediglich nur noch, zu erkennen, ob der neu benutzte Reifen zu einer anderen Klasse gehört, das heißt zu erkennen, ob ein größerer oder ein kleinerer Reifen verbaut wurde.

Insbesondere wenn der verbaute Reifen mittels des Absolutwertes seines abgeschätztes Umfanges nicht einer der mindestens zwei Klassen zugeordnet werden kann, weil dieser Absolutwert von dem zwischen den Umfangsintervallen der zwei Klassen liegenden Umfangsintervall liegt, wird, wie bereits oben erwähnt, der Differenzwert zwischen dem Absolutwert des abgeschätzten Umfang des verbauten Rades und dem Umfang des anfänglich verbauten Rades gebildet. Der Umfang des anfänglich verbauten Reifens wird erfindungsgemäß insbesondere mittels derselben Messvorrichtungen und mittels demselben Verfahren wie der Umfang des benutzten Reifens abgeschätzt, und dadurch teilweise mit in etwa gleichen relativen systematischen Fehlern bestimmt. Bei der Bildung des Differenzwertes kompensieren sich dann zum Teil die systematischen Fehler der differenzbildenden Größen. Damit reduziert sich der relative systematische Fehler des genannten Differenzwertes deutlich. Ist die Klassenzugehörigkeit der anfänglich verbauten Reifen bekannt, so kann bei der Differenzbildung für den Umfang der anfänglich verbauten Reifen der mittlere Umfang derjenigen Reifen angenommen werden, die die Klasse bilden, zu der der anfänglich verbaute Reifen gehört. Somit kann der genannte Differenzwert genauer bestimmt werden und dadurch besser mit dem relativen Abstand der zwei Klassen zueinander verglichen werden. Ist der Differenzwert kleiner als der relative Abstand der zwei Klassen zueinander, so wird der benutzte Reifen der bekannten Klasse zugeordnet, zu der der anfänglich verbaute Reifen gehört. Ist der genannte Differenzwert größer als der relative Abstand der zwei Klassen zueinander, so wird der benutzte Reifen der anderen der zwei Klassen zugeordnet.

Bei dem erfindungsgemäßen Verfahren wird insbesondere ein zurückgelegter Gierwinkel einmal unabhängig vom Umfang der verbauten Reifen und einmal auf der Basis des Umfangs des anfänglich als verbaut angenommenen Reifens (Zweispurmodell) bestimmt. Anhand des so bestimmten Gierwinkels wird dann der Umfang der verbauten Reifen abgeschätzt. Insbesondere wird der zurückgelegte Gierwinkel, der unabhängig vom Umfang der verbauten Reifen bestimmt wird, mittels der Integration der ausgelegten Fahrzeugdrehrate (Gierrate) berechnet. Die Gierrate wird üblicherweise im Fahrzeug über einen Gierratensensor ermittelt.

Bei der erfindungsgemäßen Klassenzuordnung anhand des Differenzwertes zwischen dem Absolutwert des mittels des Gierratensensors und des Zweispurmodells abgeschätzten Umfangs des verbauten Rades und dem Umfang des anfänglich verbauten Reifens kompensieren sich teilweise die systematische Fehler der differenzbildenden Größen. Dabei teilt sich der relative systematische Fehler des Gierratensensors von etwa 3% in circa 1% Produktionstoleranzfehler, 1% Alterungsfehler sowie 1% Temperaturabhängigkeitsfehler auf. Bei der Berechnung des genannten Differenzwertes können sowohl der Fehler wegen der Produktionstoleranz als auch der Alterungsfehler der differenzbildenden Größen als gleich betrachtet werden. Bei der Verwendung eines Gieratensensors reduziert sich somit der relative systematische Fehler des berechneten Differenzwertes auf den Temperaturabhängigkeitsfehler von beispielsweise1%.

Erfindungsgemäß wird ferner ein besonders vorteilhaftes Verfahren zum automatischen Einparken eines Fahrzeuges und ein entsprechendes Einparksystem bereitgestellt. Dabei wird eine Parklücke erfasst, eine zum Einparken in die Parklücke zu befahrene Bahn in Abhängigkeit von der erfassten Parklücke und von dem erfindungsgemäß ermittelten Reifenumfang der verbauten Räder des Fahrzeuges berechnet und das Fahrzeug entlang der berechneten Bahn automatisch in die Parklücke gelenkt.

Schließlich wird erfindungsgemäß ein Fahrzeugassistenzsystem mit der erfindungsgemäßen Vorrichtung zum Ermitteln des Umfangs eines an einem Fahrzeug verbauten Reifens und/oder mit einem erfindungsgemäßen Einparksystem bereitgestellt.

Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

Figur 1    eine Darstellung zur Bestimmung des von einem Fahrzeug zurückgelegten Gierwinkels auf der Basis des Reifenumfangs der am Fahrzeug verbauten Reifen nach einer ersten Ausführungsform der Erfindung,

Figur 2    eine Darstellung zu der nach der ersten Ausführungsform der Erfindung durchgeführte Einteilung von 3 verbaubaren Reifentypen und den dazugehörigen Reifenumfängen vor und nach einer Berücksichtigung einer effektiven Spurbreite in zwei Klassen,

Figur 3    eine Darstellung zu der nach der ersten Ausführungsform der Erfindung durchgeführte Einteilung von drei verbaubaren Reifentypen und den dazugehörigen, unter der Berücksichtigung eines maximalen Empfindlichkeitsfehlers des Gierratensensors von 3% abgeschätzten Reifenumfängen nach der Berücksichtigung der effektiven Spurbreite in zwei Klassen, und

Figur 4    eine Darstellung zu der nach der ersten Ausführungsform der Erfindung durchgeführte Einteilung von drei verbaubaren Reifentypen und den dazugehörigen, nur unter der Berücksichtigung des Temperaturfehlers des Gierratensensors von 1% abgeschätzten Reifenumfängen in zwei Klassen nach der Berücksichtigung der effektiven Spurbreite.

Ausführungsform der Erfindung

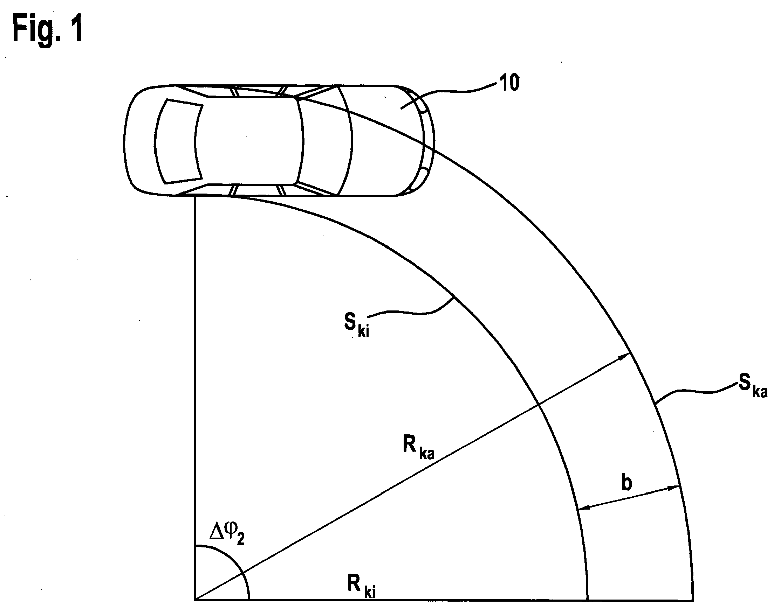

Mit Hilfe der Figuren 1 bis 4 wird im Folgenden erläutert, wie mittels des erfindungsgemäßen Verfahrens nach einer ersten Ausführungsform der Erfindung der Reifenumfang eines an einem Fahrzeug verbauten Reifens abgeschätzt und ferner eine Zuordnung der verbauten Reifen auf eine Klasse von Reifengrößen realisiert wird.

Die erfindungsgemäße Reifenumfangsschätzung basiert auf einem Abgleich zweier Messmethoden, wobei ein Wert eines zurückgelegten Gierwinkels zum einen mittels einer ersten Messmethode unabhängig vom Reifenumfang bestimmt wird, um einen ersten Gierwinkelmesswert $\Delta\varphi_1$ zu erhalten, und zum anderen auch mittels einer zweiten Messmethode auf der Basis des Reifenumfangs der als anfänglich verbaut angenommenen Reifen bestimmt wird, um daraus einen zweiten Gierwinkelmesswert $\Delta\varphi_2$ zu erhalten. Nachstehend wird der Gierwinkel, bestimmt mittels der ersten Messmethode mit $\Delta\varphi_1$ bezeichnet, und derselbe Gierwinkel, wenn er mit der zweiten Methode bestimmt wurde, mit $\Delta\varphi_2$ bezeichnet.

Genauer gesagt wird der erste Messwert für den zurückgelegte Gierwinkel $\Delta\varphi_1$ aus der mit der über Integration der ausgelesenen Fahrzeugdrehrate (Gierrate) gewonnene Winkeländerung $\Delta\varphi_{meas}$, wie in der Relation (1) dargestellt ist, bestimmt. Dabei ist die Gierrate üblicherweise im Fahrzeug über einen Gierratensensor bekannt.

$$\Delta\varphi_1 = \Delta\varphi_{meas} \tag{1}$$

Weiterhin wird bei der zweiten Messmethode der zurückgelegte Gierwinkel $\Delta\varphi_2$ aus der über den Wegstreckenunterschied von kurvenäußerem und kurveninnerem Hinterrad gewonnene Winkeländerung (Zweispurmodell), wie in der Relation (2) erläutert, bestimmt.

$$\Delta\varphi_2 = \frac{S_{Ka} - S_{Ki}}{b} \tag{2}$$

Mit $b$ wird dabei der Radienunterschied bezeichnet, der sich aus der Differenz der gemessenen Wegstrecken von kurvenäußerem und kurveninnerem Rad ergibt. Die so bestimmte "effektive Spurbreite" $b$ ist abhängig vom Fahrzeug und vom verwendeten Reifen. Mit $S_{Ka}$, $S_{Ki}$ werden die Wegstrecken bezeichnet, die jeweils aus der Differenz der Zählerstandswerte der Drehzahlfühler des kurvenäußeren beziehungsweise kurveninneren Rades am Kurvenanfang und am Kurvenende ermittelt werden, und die jeweils mit einer parametrierten Wegstrecke pro Radimpuls $S_{tick}$ multipliziert werden. Bei der Reifenumfangsberechnung wird ferner die Anzahl der Radimpulse $n_{tick}$ pro Reifenumfang benötigt.

Im Folgenden wird anhand der in Figur 1 gezeigten Darstellung die Bestimmung eines von einem Fahrzeug 10 zurückgelegten Gierwinkels $\Delta\varphi_2$ von 90° auf der Basis des Reifenumfangs der am Fahrzeug als anfänglich verbaut angenommenen Reifen nach einer ersten Ausführungsform der Erfindung erläutert. Der zurückgelegte Gierwinkel $\Delta\varphi2$ wird mittels von Wegstreckenunterschieden von kurvenäußerem Hinterrad zu kurveninnerem Hinterrad bestimmt. Die in der Figur 1 verwendeten Bezeichnungen $S_{Ka}$, $S_{Ki}$ und $b$ wurden in den vorherigen Abschnitt bereits eingeführt und erklärt. Die zu befahrene Bahn des Fahrzeuges wird als eine Kurve mit einem Winkel $\Delta\varphi_2$ von 90° dargestellt, die einen gegenüber des kurveninnerem Hinterrades betrachteten inneren Radius $R_{Ki}$ und einer gegenüber des kurveninnerem Hinterrad betrachtete äußeren Radius $R_{Ka}$ aufweist. Damit ergeben sich zwischen $S_{Ka}$, $S_{Ki}$, $\Delta\varphi_2$, $R_{Ka}$, $R_{Ki}$ und $b$ die in den Relationen (3), (4) und (5) gezeigten Zusammenhänge.

$$S_{Ki} = \Delta\varphi_2 \cdot R_{Ki} = \frac{\pi}{2} \cdot R_{Ki} \tag{3}$$

$$S_{Ka} = \Delta\varphi_2 \cdot R_{Ka} = \frac{\pi}{2} \cdot R_{Ka} = \frac{\pi}{2} \cdot (R_{Ki} + b) \tag{4}$$

$$S_{Ka} - S_{Ki} = \Delta\varphi_2 \cdot b = \frac{\pi}{2} \cdot b \tag{5}$$

Aus dem zurückgelegten, unabhängig vom Reifenumfang bestimmten Gierwinkel $\Delta\varphi_1$ und aus dem zurückgelegten, auf der Basis des Reifenumfangs der als anfänglich verbaut angenommenen Reifen bestimmten Gierwinkel $\Delta\varphi_2$ kann ein Korrekturfaktor $k$, wie in der Relation (6) erläutert, berechnet werden. Mit diesem Korrekturfaktor $k$ kann dann eine parametrierte Wegstrecke pro Radimpuls $S_{tick}$, die bei der Berechnung der von beispielsweise kurvenäußerem beziehungsweise kurveninnerem Hinterrad zurückgelegten Wegstrecken verwendet wird, multipliziert werden, um daraus schließlich eine dem dynamischen Abrollradius entsprechende Parametrierung zu erhalten.

$$k = \frac{\Delta\varphi_1}{\Delta\varphi_2} = \frac{b \cdot \Delta\varphi_1}{S_{Ka} - S_{Ki}} \tag{6}$$

In der Relation (7) ist der Zusammenhang zwischen dem Reifenumfang $RU$ und dem berechneten Korrekturfaktor $k$ erläutert, wobei angenommen wird, dass die Anzahl von Radimpulsen pro Radumdrehung $n_{tick}$ konstant ist.

$$RU = k \cdot S_{tick} \cdot n_{tick}. \tag{7}$$

Bei der erfindungsgemäßen Abschätzung des Reifenumfangs werden erfindungsgemäß insbesondere alle der im Folgenden aufgelisteten Grundannahmen getroffen:

- Bei der Bestimmung von $\Delta\varphi_{meas}$ ist das Drehratensignal Offsetkompensiert, sodass ein entsprechender Fehlereinfluss vernachlässigt werden kann. Verfahren hierzu sind im Stand der Technik bekannt.

- Ein Reifentoleranzabgleich hat bereits stattgefunden, sodass relative Unterschiede zwischen kurveninnerem und kurvenäußerem Rad bereits kompensiert worden sind.

- Es werden nur Fahrten mit einer nicht zu hohen Giergeschwindigkeit für die Abschätzung des Reifenumfanges zugelassen, um zu vermeiden, dass die mit der Giergeschwindigkeit ansteigenden Fliehkräfte zu einer Einpressung des kurvenäußeren Rades führen, was den abzuschätzenden dynamischen Abrollradius verfälschen kann.

- Es werden nur Fahrten mit ausreichend hoher Giergeschwindigkeit für die Abschätzung des Reifenumfangs zugelassen, um einen ausreichenden Abstand vom Grundrauschen des Sensors zu gewährleisten.

- Wenn die Hinterachse angetrieben ist, wird die Abschätzung des Reifenumfangs nur dann durchgeführt, wenn die Geschwindigkeit des Fahrzeuges konstant ist oder leicht abfallend ist.

- Zusätzlich kann es vorteilhaft sein, die Schätzung des Reifenumfangs auf einen bestimmten Temperaturbereich einzuschränken, in dem der Fehler des Gierratensensors geringer ist.

- Der Empfindlichkeitsfehler eines Gierratensensors liegt typischerweise in der Größenordnung von circa $\pm$ 3%. Damit ist die maximal erreichbare Genauigkeit der Reifenumfangsabschätzung ebenfalls lediglich im Bereich > 3%. Da für automatische Einparksysteme eine Genauigkeit von < 1,5% benötigt wird, werden bei dem erfindungsgemäßen Verfahren die verbaubaren Reifen in Klassen ähnlichen Reifenumfangs eingeteilt. Über die Reifenumfangsabschätzung wird nur die Zuordnung zu einer Klasse von Reifen ähnlichen Umfangs vorgenommen, wobei aber keine Zuordnung zu einem absoluten Reifenradius erfolgt.

- Die Aufteilung in Klassen hat zusätzlich den Vorteil, dass der Einfluss der "effektiven Spurbreite" $b$, die für Reifen unterschiedlichen Typs nicht konstant ist und die die Umfangsabschätzung zusätzlich verfälscht, in der Klassenbildung berücksichtigt und damit kompensiert wird.

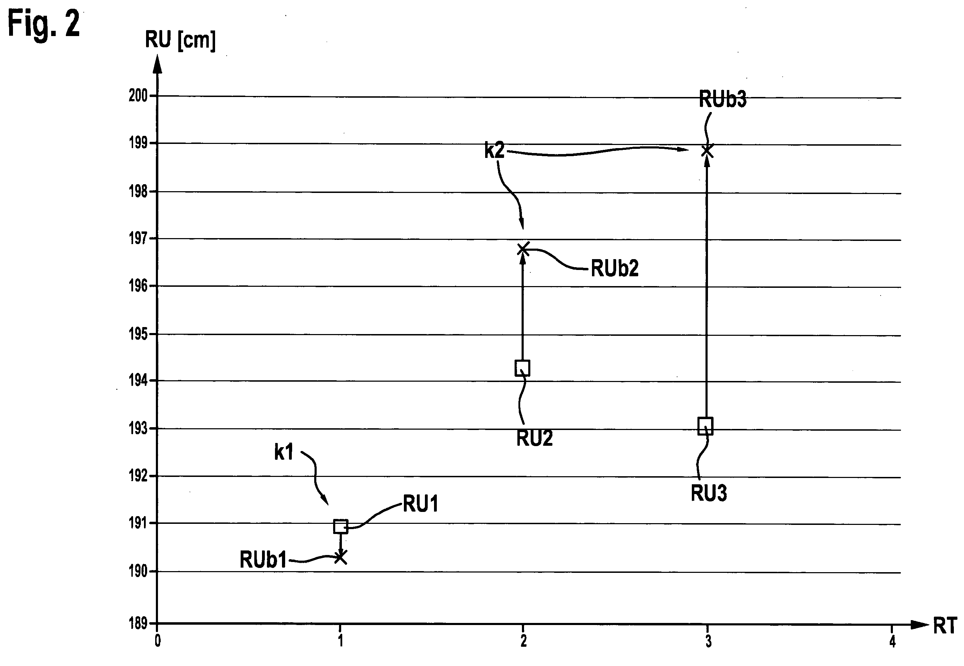

In der Figur 2 ist ein Diagramm dargestellt, das eine Verteilung von in cm angegebenen, berechneten idealen Reifenumfängen $RU$ der verbaubaren Reifen auf drei Reifentypen $RT$, auf der x-Achse mit den Zahlen 1, 2, 3 bezeichnet, zeigt. Ferner ist gezeigt, wie sich die Umfangsbestimmung durch die effektive Spurbreite $b$ verändert und wie die Klassenzuteilung auf zwei Klassen $K1$ und $K2$ vorgenommen wird. Hier sind beispielhaft 3 Reifentypen ausgewertet, wobei mit 1 der Reifentyp 195/55R16, mit 2 ist der Reifentyp 205/55R16, und mit 3 ist der Reifentyp 245/40R17 gekennzeichnet wird. Mit $RU1$, $RU2$ und RU3 sind die berechneten idealen Reifenumfänge für die entsprechenden Reifentypen 1, 2 oder 3 gekennzeichnet. Mit $RUb1$, $RUb2$ und $RUb3$ sind die korrigierten Reifenumfänge nach der Berücksichtigung der "effektiven Spurbreite" $b$ für den jeweils entsprechenden Reifentyp 1, 2 oder 3 gekennzeichnet.

Bei dem in der Figur 2 dargestellten Fall bildet der Reifentyp 1 die erste Klasse von Reifen $K1$. Ferner bilden der Reifentyp 2 und der Reifentyp 3 die zweite Klasse von Reifen $K2$. Für die Einparksysteme wird dann für jede Klasse von Reifen $K1$, $K2$ ein mittlerer Reifenumfang angenommen.

Damit reduziert sich erfindungsgemäß die Aufgabe in die Identifikation von Reifen zur Zugehörigkeit zu einer Klasse von Reifen. Wenn ein Reifen anfänglich (initial) bekannt ist, muss weiterhin nur noch erkannt werden, ob ein eventueller Reifenwechsel stattgefunden hat. Dabei ist es lediglich nur noch relevant zu erkennen, ob der neu benutzte Reifen zu einer anderen Klasse gehört, das heißt, ob ein größerer oder kleinerer Reifen verbaut wurde.

Diese Art Deltabetrachtung, d.h. die Aussage "Verbau größerer Reifen" beziehungsweise "Verbau kleinerer Reifen" hat den Vorteil, dass systematische Fehler des Gierratensensors kompensiert werden können. So teilt sich der relative Fehler des Gierratensensors in circa 1% Produktionstoleranzfehler, 1% Alterungsfehler sowie 1% Temperaturabhängigkeitsfehler auf. Durch die Deltabetrachtung der bestimmten Reifenumfänge, beispielsweise über aufeinanderfolgende Klemmenzyklen, kann sowohl der Fehler der Produktionstoleranz sowie der Alterungsfehler als gleich betrachtet und damit vernachlässigt werden. Damit reduziert sich der relative Fehler in der Deltabetrachtung auf nur noch 1%.

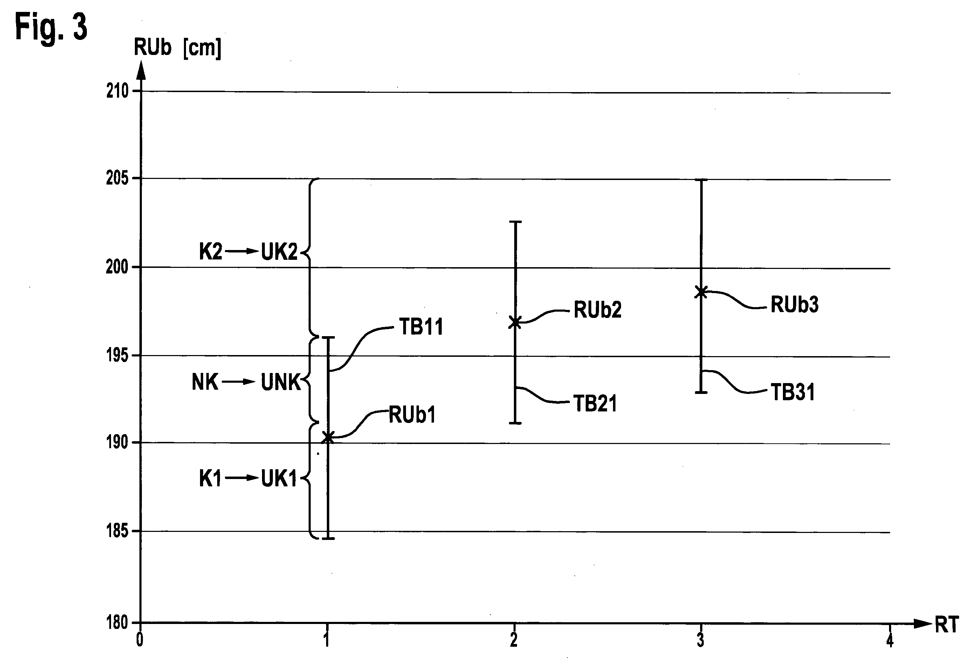

In der Figur 3 ist dargestellt, wie sich die in cm angegebenen, korrigierten Reifenumfänge der beispielhaften verbaubaren Reifen $RUb$ nach der Berücksichtigung der "effektiven Spurbreite" $b$ auf die drei mit den Zahlen 1, 2, 3 entsprechend bezeichneten Reifentypen $RT$ aus der Figur 2 verteilen. Dabei ist beispielhaft anhand einer Auswertung der 3 Reifentypen aus der Figur 2 zusätzlich dargestellt, welche Auswirkung die zusätzliche Berücksichtigung des Empfindlichkeitsfehlers von ± 3% des Gierratensensors auf die Umfangsbestimmung hat und in welchem Bereich die Klassenzuordnung auf die zwei Klassen noch eindeutig ist. Ferner sind die mittels eines Empfindlichkeitsfehlers des Gierratensensors von ± 3% berechneten Toleranzbänder der korrigierten Reifenumfänge der verbaubaren Reifen $RUb1$, $RUb2$ und $RUb3$ nach der Berücksichtigung der "effektiven Spurbreite" $b$ für die 3 Reifentypen entsprechend mit $TB11$, $TB21$ und $TB31$ bezeichnet. Weiterhin werden die erste Klasse von Reifen mit $K1$ und die zweite Klasse von Reifen mit $K2$ bezeichnet.

Kann der Absolutwert des Reifenumfangs $RUb$ eindeutig einer der zwei Klassen von Reifen $K1$, $K2$ zugeordnet werden, so wird die Klasse dementsprechend eindeutig zugeordnet.

Weiterhin wird in der Figur 3 wird mit $NK$ eine Gruppe von Reifen bezeichnet, die anhand des Absolutwertes ihres abgeschätzten Reifenumfangs $RUb$ keiner der Klassen von Reifen $K1$, $K2$ eindeutig zugeordnet werden können und die einen Absolutwert ihres abgeschätzten Umfangs aufweisen, der in dem zwischen den Umfangsintervallen $UK1$, $UK2$ der zwei Klassen $K1$, $K2$ liegenden Umfangsintervall $NKU$ enthalten ist.

Ist die Zuordnung eines Reifens anhand des Absolutwertes seines abgeschätzten Umfangs $RUb$ zu einer der zwei Klassen von Reifen $K1$, $K2$ nicht eindeutig, so wird die Deltabetrachtung zusätzlich genutzt, um eine eindeutige Zuordnung vornehmen zu können.

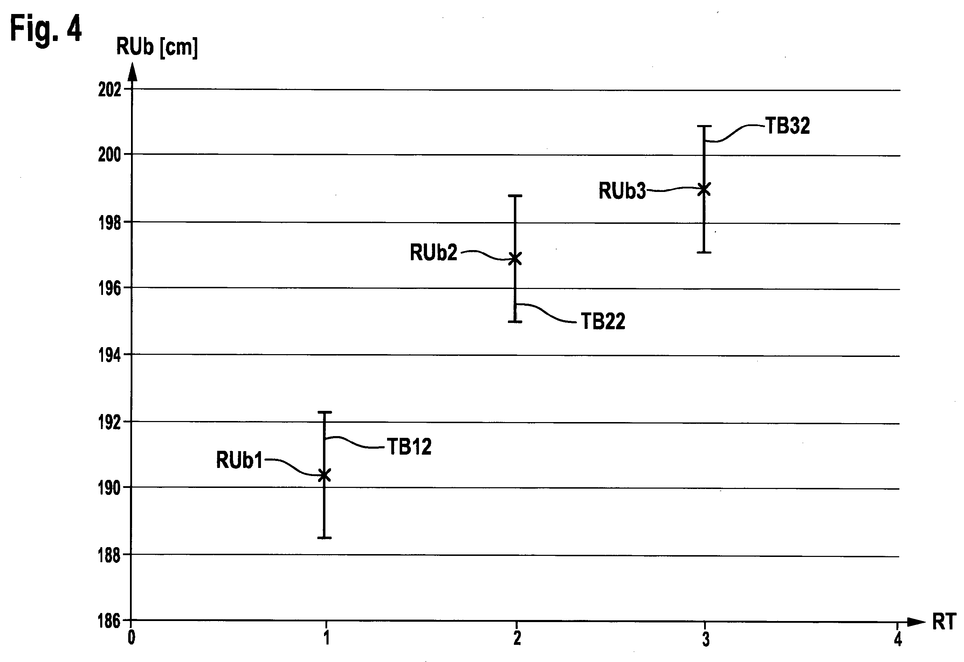

In der Figur 4 ist dargestellt, wie sich die in cm angegebenen, korrigierten Reifenumfänge der verbaubaren Reifen $RUb$ nach der Berücksichtigung der "effektiven Spurbreite" $b$ auf die drei mit den Zahlen 1, 2, bzw. 3 bezeichneten Reifentypen $RT$ aus der Figur 2 verteilen. Dabei ist in der Figur 4 ist beispielhaft anhand einer Auswertung der 3 Reifentypen aus der Figur 3 zusätzlich dargestellt, wie sich die Toleranzbänder $TB11$, $TB21$ und $TB31$ bei einem angenommenen Empfindlichkeitsfehler des Gierratensenors von nur noch 1% auf die weiteren Toleranzbänder $TB12$, $TB22$ und $TB32$ jeweils verkleinern. Dabei werden die systematischen Fehler wegen Alterung und Produktionstoleranz vernachlässigt und nur noch der systematische Fehler wegen der Temperaturabhängigkeit betrachtet. Dadurch lässt sich die Zugehörigkeit eines Reifens zu einer der Reifenklassen $K1$ und $K2$ eindeutig bestimmen. Relevant ist hier der relative Abstand der Reifenklassen zueinander. Der absolute Reifenumfang $RUb$ kann sich in dem Toleranzband wie in der Figur 3 dargestellt bewegen, wobei der relative Abstand der Reifenklassen zueinander aber erhalten bleibt.

Die anfängliche bzw. initiale Bestimmung der jeweiligen Reifenklasse der verbauten Reifen kann entweder durch den Gierratensensor bestimmt werden, da hier der Alterungsfehler des Gierratensensors als vernachlässigbar angenommen werden kann, oder am Ende des Fahrzeugproduktion bekannt gemacht werden, da hier die Reifengröße der verbauten Reifen genau bekannt ist.

Unter der Annahme, dass die Reifenklasse der anfänglich verbauten Reifen bekannt ist, kann somit erfindungsgemäß mithilfe der Deltabetrachtung unter Einbeziehung der relativen Abstände der Klassen zueinander eine eindeutige Zuordnung des abgeschätzten Reifenumfanges der später verbauten Reifen erfolgen.

Neben der voranstehenden schriftlichen Offenbarung wird hiermit zur weiteren Offenbarung der Erfindung ergänzend explizit auf die Darstellung in den Figuren 1 bis 4 Bezug genommen.

**Patentansprüche**

1. Verfahren zum Ermitteln des Umfanges der an einem Fahrzeug (10) verbauten Reifen, bei dem der Umfang der verbauten Reifen gemäß einer durch ein vorbestimmtes Toleranzband ($TB11$, $TB21$, $TB31$) gegebenen Mindestgenauigkeit abgeschätzt wird, **dadurch gekennzeichnet, dass** die an dem Fahrzeug (10) verbaubaren Reifen in mindestens zwei Klassen ($K1$, $K2$) von jeweils vorbestimmtem Umfangsintervall ($UK1$, $UK2$) eingeteilt werden, derart dass die Umfängsintervalle ($UK1$, $UK2$) der mindestens zwei Klassen ($K1$, $K2$) sich nicht überlappen und jeweils eine Intervallgröße kleiner als das Toleranzband ($TB11$, $TB21$, $TB31$) des abgeschätzten Umfanges der verbauten Reifen aufweisen, und dass die verbauten Reifen anhand ihres abgeschätzten Umfanges einer der zwei Klassen ($K1$, $K2$) zugeordnet werden, wodurch der Umfang der verbauten Reifen anhand der bestimmten Klassenzugehörigkeit des verbauten Reifens ermittelt wird.

2. Verfahren nach Anspruch 1, **dadurch gekennzeichnet, dass** wenn der Absolutwert ($RUb1$, $RUb2$, $RUb3$) des abgeschätzten Umfanges der verbauten Reifen in dem Umfangsintervall ($UK1$, $UK2$) einer der zwei Klassen ($K1$, $K2$) enthalten ist, die verbauten Reifen dieser Klasse zugeordnet werden und/oder wenn der Absolutwert ($RUb1$, $RUb2$, $RUb3$.) des abgeschätzten Umfanges der verbauten Reifen in einem zwischen den Umfangsintervallen ($UK1$, $UK2$) der zwei Klassen ($K1$, $K2$) liegenden Umfangsintervall ($NKU$) enthalten ist, der Differenzwert zwischen dem Absolutwert ($RUb1$, $RUb2$, $RUb3$) des abgeschätzten Umfanges der verbauten Reifen und einem Umfang eines als anfänglich verbaut angenommenen Reifens berechnet wird, der berechnete Differenzwert mit der Intervallgröße des zwischen den Umfangsintervallen ($UK1$, $UK2$) der zwei Klassen ($K1$, $K2$) liegenden Umfangsintervalls ($NKU$) verglichen wird und die verbauten Reifen entsprechend dem Vergleichsergebnis einer der zwei Klassen ($K1$, $K2$) zugeordnet werden.

3. Verfahren nach einem der Ansprüche 1 oder 2, **dadurch gekennzeichnet, dass** ein zurückgelegter Gierwinkel einmal unabhängig vom Umfang der verbauten Reifen ($\Delta\varphi_1$) und einmal auf der Basis des Umfangs des als anfänglich verbaut angenommenen Reifens ($\Delta\varphi_2$) bestimmt wird, wobei der Umfang der verbauten Reifen anhand eines Vergleichs der so bestimmten Gierwinkel abgeschätzt wird.

4. Verfahren zum automatischen Einparken eines Fahrzeuges (10) in eine Parklücke, bei dem die Parklücke erfasst wird, eine zum Einparken in die Parklücke zu befahrene Bahn in Abhängigkeit von der erfassten Parklücke und von dem mittels eines Verfahrens nach einem der vorangehenden Ansprüche ermittelten Reifenumfang der verbauten Reifen des Fahrzeuges (10) berechnet wird, und das Fahrzeug (10) entlang der berechneten Bahn automatisch in die Parklücke gelenkt wird.

5. Vorrichtung zum Ermitteln des Umfanges der an einem Fahrzeug (10) verbauten Reifen, die dazu ausgebildet ist, den Umfang der verbauten Reifen gemäß einer durch eine vorbestimmtes Toleranzband (*TB*11, *TB*21, *TB*31) gegebenen Mindestgenauigkeit abzuschätzen, **dadurch gekennzeichnet, dass** die Vorrichtung dazu ausgebildet ist, einen zurückgelegten Gierwinkel einmal unabhängig vom Umfang der verbauten Reifen ($\Delta\varphi_1$) und einmal auf der Basis des Umfangs des als anfänglich verbaut angenommenen Reifens ($\Delta\varphi_2$) zu bestimmen und den Umfang der verbauten Reifen anhand eines Vergleichs der so bestimmten Gierwinkel ($\Delta\varphi_1$, $\Delta\varphi_2$) abzuschätzen, wobei die Vorrichtung eine Auswerteeinrichtung umfasst, die dazu ausgebildet ist, die an dem Fahrzeug (10) verbaubaren Reifen in mindestens zwei Klassen (*K*1, *K*2) von jeweils vorbestimmtem Umfangsintervall (*UK*1, *UK*2) derart einzuteilen, dass die Umfangsintervalle (*UK*1, *UK*2) der zwei Klassen (*K*1, *K*2) sich nicht überlappen und jeweils eine Intervallgröße kleiner als das Toleranzband (*TB*11, *TB21*, *TB*31) des abgeschätzten Umfanges des verbauten Reifens aufweisen, und dass die Auswerteeinheit weiter dazu ausgebildet ist, die verbauten Reifen anhand ihres abgeschätzten Umfanges einer der zwei Klassen (*K*1, *K*2) zuzuordnen und dadurch den Umfang der verbauten Reifen anhand der bestimmten Klassenzugehörigkeit der verbauten Reifen zu ermitteln.

6. Vorrichtung nach Anspruch 5, **dadurch gekennzeichnet, dass** die Auswerteeinrichtung derartig ausgebildet ist, beim Vorliegen eines - Absolutwertes (*RUb*1, *RUb*2, *RUb*3) des abgeschätzten Umfanges der verbauten Reifen, der in dem Umfangsintervall (*UK*1, *UK*2) einer der zwei Klasse enthalten (*K*1, *K*2) ist, die verbauten Reifen dieser Klasse zuzuordnen und/oder beim Vorliegen eines in einem Umfangsintervall *NKU* zwischen den Umfangsintervallen (*UK*1, *UK*2) der zwei Klassen liegenden Absolutwertes (*RUb*1, *RUb2*, *RUb*3) des abgeschätzten Umfanges der verbauten Reifen, einen Differenzwert zwischen dem Absolutwert des abgeschätzten Umfanges der verbauten Reifen und einem Umfang eines als anfänglich verbaut angenommenen Reifens zu berechnen, den berechneten Differenzwert mit der Intervallgröße des zwischen den Umfangsintervalle (*UK*1, *UK*2) der zwei Klassen (*K*1, *K*2) vorhandene Umfangsintervalls (*NKU*) zu vergleichen, und die verbauten Reifen entsprechend dem Vergleichsergebnis einer der zwei Klassen (*K*1, *K*2) zuzuordnen.

7. Einparksystem zum automatischen Einparken eines Fahrzeuges (10), das eine Vorrichtung nach einem der Ansprüche 5 oder 6 umfasst und dazu ausgebildet ist, eine Parklücke zu erfassen, eine zum Einparken in die Parklücke zu befahrene Bahn in Abhängigkeit von der erfassten Parklücke und von dem ermittelten Reifenumfang der verbauten Reifen des Fahrzeuges (10) zu berechnen, und das Fahrzeug (10) automatisch entlang der berechneten Bahn in die Parklücke zu lenken.

8. Fahrzeugassistenzsystem mit einer Vorrichtung nach einem der Ansprüche 5 bis 6 und/oder mit einem Einparksystem nach Anspruch 7.

**Claims**

1. Method for determining the circumference of the tyres fitted on a vehicle (10), in which the circumference of the fitted tyres is estimated in accordance with a minimum accuracy level given by a predetermined tolerance band (*TB11, TB21, TB*31) **characterized in that** the tyres which can be fitted on the vehicle (10) are classified into at least two classes (*K*1, *K2*) of respectively predetermined circumferential interval (*UK*1, *UK*2) in such a way that the circumferential intervals (*UK*1, *UK2*) of the at least two classes (*K*1, *K*2) do not overlap and each have an interval size which is smaller than the tolerance band (*TB11*, *TB*31) of the estimated circumference of the fitted tyres, and **in that** the fitted tyres are assigned to one of the two classes (*K*1, *K2*) on the basis of their estimated circumference, as a result of which the circumference of the fitted tyres is determined on the basis of the determined class membership of the fitted tyre.

2. Method according to Claim 1, **characterized in that** if the absolute value (*RUb*1, *RUb2, RUb3*) of the estimated circumference of the fitted tyres is contained in the circumferential interval (*UK*1, *UK*2) of one of the two classes (*K*1, *K2),* the fitted tyres are assigned to this class and/or if the absolute value (*RUb*1, *RUb2, RUb3*) of the estimated circumference of the fitted tyres is contained in a circumferential interval *(NKU)* lying between the circumferential intervals (*UK*1, *UK*2) of the two classes (*K*1, *K2),* the differential value between the absolute value (*RUb*1, *RUb2, RUb3)* of the estimated circumference of the fitted tyres and a circumference of a tyre which is assumed as being initially fitted is calculated, the calculated differential value is compared with the interval size of the circumferential interval (*NKU*) lying between the circumferential intervals (*UK*1, *UK*2) of the two classes (*K*1, *K2),* and the fitted tyres are assigned to one of the two classes (*K*1, *K2)* in accordance with the comparison result.

3. Method according to one of Claims 1 or 2, **characterized in that** a yaw angle which has been travelled through is determined once independently of the circumference of the fitted tyres ($\Delta\varphi_1$) and once on the basis of the circumference of the tyre ($\Delta\varphi_2$) which is assumed as being initially fitted, wherein the circumference of the fitted tyres is estimated on the basis of a comparison of the yaw angles determined in this way.

4. Method for automatically parking a vehicle (10) in a parking space, in which method the parking space is detected, a path to be travelled along in order to park in the parking space is calculated as a function of the detected parking space and of the tyre circumference of the fitted tyres of the vehicle (10), which is determineed by means of a method according to one of the preceding claims, and the vehicle (10) is steered automatically into the parking space along the calculated path.

5. Device for determining the circumference of the tyres fitted on a vehicle (10), which device is designed to estimate the circumference of the fitted tyres according to a minimum accuracy level which is given by a predetermined tolerance band (*TB11, TB21,* TB31), **characterized in that** the device is designed to determine a yaw angle which has been travelled through, once independently of the circumference of the fitted tyres ($\Delta\varphi_1$) and once on the basis of the circumference of the tyre ($\Delta\varphi_2$) which is assumed as being initially fitted, and to estimate the circumference of the fitted tyres on the basis of a comparison of the yaw angles ($\Delta\varphi_1$, $\Delta\varphi_2$) determined in this way, wherein the device comprises an evaluation apparatus which is designed to classify the tyres which can be fitted on the vehicle (10) into at least two classes (*K*1, *K*2) of respectively predetermined circumferential interval (*UK*1, *UK*2) in such a way that the circumferential intervals (*UK*1, *UK2*) of the two classes (*K*1, *K*2) do not overlap and each have an internal size which is smaller than the tolerance band (*TB11, TB21, TB31*) of the estimated circumference of the fitted tyre, and **in that** the evaluation unit is also designed to assign the fitted tyres to one of the two classes (*K*1, *K2)* on the basis of their estimated circumference and as a result to determine the circumference of the fitted tyres on the basis of the determined class membership of the fitted tyres.

6. Device according to Claim 5, **characterized in that** the evaluation apparatus is designed, given the presence of an absolute value (*RUb*1, *RUb2, RUb3)* of the estimated circumference of the fitted tyres, which is contained in the circumferential interval (*UK*1, *UK*2) of one of the two classes (*K*1, *K*2), to assign the fitted tyres to this class and/or given the presence of an absolute value (*RUb*1, *RUb2, RUb3)* of the estimated circumference of the fitted tyres which lies in a circumferential interval *NKU* between the circumferential intervals (*UK1, UK2)* of the two classes, to calculate a differential value between the absolute value of the estimated circumference of the fitted tyres and a circumference of a tyre which is assumed as being initially fitted, to compare the calculated differential value with the interval size of the circumferential interval *(NKU)* which is present between the circumferential intervals (*UK1, UK*2) of the two classes (*K*1, *K2),* and to assign the fitted tyres to one of the two classes (*K*1, *K2)* in accordance with the comparison result.

7. Parking system for automatically parking a vehicle (10), which comprises a device according to one of Claims 5 or 6 and is designed to detect a parking space, to calculate a path to be travelled along in order to park in the parking space, as a function of the detected parking space and of the determineed tyre circumference of the fitted tyres of the vehicle (10), and to steer the vehicle (10) automatically into the parking space along the calculated path.

8. Vehicle assistance system having a device according to one of Claims 5 to 6, and/or having a parking system according to Claim 7.

**Revendications**

1. Procédé de détermination de la taille des pneus montés sur un véhicule (10), selon lequel la taille des pneus montés est estimée conformément à une précision minimale donnée par une bande de tolérance (TB11, TB21, TB31) prédéfinie, **caractérisé en ce que** les pneus qui peuvent être montés sur le véhicule (10) sont divisés en au moins deux classes (*K*1, K2) ayant chacune un intervalle de taille (UK1, UK2) prédéfini, de telle sorte que les intervalles de taille (UK1, UK2) des au moins deux classes (K1, K2) ne se chevauchent pas et présentent respectivement une taille d'intervalle inférieure à la bande de tolérance (TB11, TB21, TB31) de la taille estimée des pneus montés, et **en ce que** les pneus montés sont associés à l'une des deux classes (K1, K2) à l'aide de leur taille estimée, la taille des pneus montés étant ainsi déterminée à l'aide de la classe d'appartenance définie des pneus montés.

2. Procédé selon la revendication 1, **caractérisé en ce que** lorsque la valeur absolue (RUb1, RUb2, RUb3) de la taille estimée des pneus montés est incluse dans l'intervalle de taille (UK1, UK2) de l'une des deux classes (K1, K2), les pneus montés sont associés à cette classe et/ou lorsque la valeur absolue (RUb1, RUb2, RUb3) de la taille estimée des pneus montés est incluse dans un intervalle de taille (NKU) qui se trouve entre les intervalles de taille (UK1, UK2) des deux classes (K1, K2), la valeur de la différence entre la valeur absolue (RUb1, RUb2, RUb3) de la taille estimée des pneus montés et une taille d'un pneu supposé monté initialement est calculée, la valeur de la différence calculée est comparée avec la taille d'intervalle de l'intervalle de taille (NKU) qui se trouve entre les intervalles de taille (UK1, UK2) des deux classes (K1, K2) et les pneus montés sont associés à l'une des deux classes (K1, K2) conformément au résultat de la comparaison.

3. Procédé selon l'une des revendications 1 ou 2, **caractérisé en ce qu'**un angle de lacet parcouru est défini une fois indépendamment de la taille des pneus montés ($\Delta\varphi_1$) et une fois en se basant sur la taille du pneu supposé monté initialement ($\Delta\varphi_2$), la taille des pneus montés étant estimée à l'aide d'une comparaison des angles de lacet ainsi définis.

4. Procédé d'entrée en stationnement automatique d'un véhicule (10) dans un emplacement de stationnement, selon lequel l'emplacement de stationnement est détecté, une trajectoire à parcourir pour l'entrée en stationnement dans l'emplacement de stationnement est calculée en fonction de l'emplacement de stationnement détecté et de la taille déterminée des pneus montés du véhicule (10) au moyen d'un procédé selon l'une des revendications précédentes, et le véhicule (10) est guidé automatiquement dans l'emplacement de stationnement le long de la trajectoire calculée.

5. Dispositif de détermination de la taille des pneus montés sur un véhicule (10), lequel est configuré pour estimer la taille des pneus montés conformément à une précision minimale donnée par une bande de tolérance (TB11, TB21, TB31) prédéfinie, **caractérisé en ce que** le dispositif est configuré pour définir un angle de lacet parcouru une fois indépendamment de la taille des pneus montés ($\Delta\varphi_1$) et une fois en se basant sur la taille du pneu supposé monté initialement ($\Delta\varphi_2$) et pour estimer la taille des pneus montés à l'aide d'une comparaison des angles de lacet ($\Delta\varphi_1$, $\Delta\varphi_2$) ainsi définis, le dispositif comprenant un appareil d'interprétation qui est configuré pour diviser les pneus qui peuvent être montés sur le véhicule (10) en au moins deux classes (K1, K2) ayant chacune un intervalle de taille (UK1, UK2) prédéfini, de telle sorte que les intervalles de taille (UK1, UK2) des deux classes (K1, K2) ne se chevauchent pas et présentent respectivement une taille d'intervalle inférieure à la bande de tolérance (TB11, TB21, TB31) de la taille estimée du pneu monté, et **en ce que** l'unité d'interprétation est en outre configurée pour associer les pneus montés à l'une des deux classes (K1, K2) à l'aide de leur taille estimée, et déterminer ainsi la taille des pneus montés à l'aide de la classe d'appartenance définie des pneus montés.

6. Dispositif selon la revendication 5, **caractérisé en ce que** l'appareil d'interprétation est configuré de telle sorte qu'en présence d'une valeur absolue (RUb1, RUb2, RUb3) de la taille estimée des pneus montés qui est incluse dans l'intervalle de taille (UK1, UK2) de l'une des deux classes (K1, K2), les pneus montés soient associés à cette classe et/ou en présence d'une valeur absolue (RUb1, RUb2, RUb3) de la taille estimée des pneus montés qui est incluse dans un intervalle de taille NKU entre les intervalles de taille (UK1, UK2) des deux classes, il calcule une valeur de la différence entre la valeur absolue de la taille estimée des pneus montés et une taille d'un pneu supposé monté initialement, compare la valeur de la différence calculée avec la taille d'intervalle de l'intervalle de taille (NKU) qui se trouve entre les intervalles de taille (UK1, UK2) des deux classes (K1, K2) et associe les pneus montés à l'une des deux classes (K1, K2) conformément au résultat de la comparaison.

7. Système d'entrée en stationnement destiné à l'entrée en stationnement automatique d'un véhicule (10), lequel comprend un dispositif selon l'une des revendications 5 ou 6 et est configuré pour détecter un emplacement de stationnement, calculer une trajectoire à parcourir pour l'entrée en stationnement dans l'emplacement de stationnement en fonction de l'emplacement de stationnement détecté et de la taille déterminée des pneus montés du véhicule (10), et guider le véhicule (10) automatiquement dans l'emplacement de stationnement le long de la trajectoire calculée.

8. Système d'assistance de véhicule comprenant un dispositif selon l'une des revendications 5 à 6 et/ou comprenant un système d'entrée en stationnement selon la revendication 7.

Fig. 1

# Fig. 2

EP 2 849 979 B1

Fig. 3

EP 2 849 979 B1

**Fig. 4**

EP 2 849 979 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1826530 A1
- DE 102009029272 A1
- US 2008149782 A1